# EUROPEAN PATENT SPECIFICATION

(11) **EP 1 533 976 B1**
(45) Date of publication and mention of the grant of the patent: **23.07.2008**
(21) Application number: 04254133.4
(22) Date of filing: 09.07.2004
(51) Int. Cl.: H04L 29/06, H04L 29/12, H04L 29/08, H04L 12/28

(54) **Apparatus and method for requesting service provided by network equipment**
Vorrichtung und Verfahren zur Anforderung eines Dienstes, der von einem Netzwerkknoten zur Verfügung gestellt wird
Dispositif et procédé pour demander un service fourni par un noeud de réseau

(30) Priority: 20.11.2003 KR 2003082727
(43) Date of publication of application: 25.05.2005
(73) Proprietor: SAMSUNG ELECTRONICS CO., LTD., Suwon-si, Gyeonggi-do (KR)
(72) Inventor: Ko, Young-goo, Geumcheon-gu, Seoul (KR)
(74) Representative: Brandon, Paul Laurence

(56) References cited:
- EP-A- 1 345 381
- WO-A-02/096139
- WO-A-20/04051958
- "Universal Plug and Play Device Architecture, UPnP, Version 1.0" INTERNET, 8 June 2000 (2000-06-08), XP002210614
- "Understanding UPnP?: A White Paper" INTERNET, June 2000 (2000-06), XP002370921

## Description

The present invention relates to apparatus and methods for requesting a service provided by network equipment and, more particularly, but not exclusively, to methods for efficiently requesting various services through a network connecting network equipment which request or provide services.

As network technology has been developed, various network equipment operating interconnectedly with a network have been developed.

Conventionally, when a user connects network equipment to a network to perform a specific operation, the user directly establishes a network environment after obtaining hardware information regarding the network equipment and information regarding the network. However, since many vendors produce various types of network equipment and the network also varies, it is very difficult for the user who wishes to perform the specific function using the network equipment to obtain such information. Accordingly, a study has been carried out to enable the user to conveniently perform his or her desired function using the network equipment without any specialized knowledge of the network and network equipment.

For example, there is a Universal Plug and Play (hereinafter referred to as 'UPnP') being a standard, which is used in a home network based on Microsoft Cooperation.

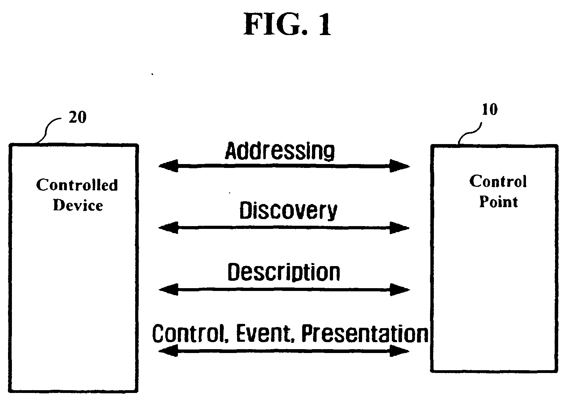

FIG. 1 is a view showing a general UPnP operation. Here, a Control Point (hereinafter referred to as 'CP') 10 represents network equipment which requests specific network equipment to perform a user's desired operation, and a Controlled Device (hereinafter referred to as 'CD') 20 represents network equipment which performs a specific operation in response to a request of the CP 10. The CP 10 and CD 20 can be classified according to functions of the network equipment, and there can be network equipment which includes functions of the CP 10 and the CD 20 jointly under certain circumstances.

According to the UPnP standard, an addressing operation is initially performed. A base of the UPnP networking is a TCP/IP protocol and a core of the protocol is an addressing function. The network equipment needs a Dynamic Host Configuration Protocol (hereinafter referred to as 'DHCP') client, and searches for a DHCP server when it is connected to a network. When the DHCP server exists, the corresponding network equipment uses an Internet address which is assigned to the network equipment. When there is no available DHCP server, the network equipment uses 'automatic IP' (Auto IP) in order to get an Internet address.

Next, a discovery operation is performed. When the CD 20 is connected to the network and an IP address is assigned, the CD 20 informs the CP 10 connected to the network of services which can be provided by the CD 20 using a UPnP Discovery Protocol. At this time, the UPnP Discovery Protocol is a subset of a UPnP protocol stack. A detailed description of the UPnP Discover Protocol standard can be obtained with reference to 'www.upnp.org'.

When the CP 10 is connected to the network and an IP address is assigned, the CP 10 searches for the CD 20 whose service is requested by the CP 10 among CDs connected to the network using the UPnP Discovery Protocol. In the discovery operation, a message exchanged between the CD 20 and the CP 10 includes only the most basic information on the network equipment itself or services provided by the network equipment. For example, the basic information can be a type of the network equipment, hardware identification information, a reference number providing contents of service, and so on.

Next, a description operation is performed. Although the CP 10 searched for its desired CD 20, the CP 10 obtains little information regarding the CD 20 through the discovery operation. Accordingly, in order for the CP 10 to obtain information regarding the CD 20, that is, hardware physical information of the network equipment or detailed contents of service provided by the network equipment, and then mutually operate with the CD 20, the CP 10 has to confirm contents explaining in detail about the CD 20 using the discovery operation and a Uniform Resource Locator (hereinafter referred to as 'URL') provided by the CD 20. At this time, the contents are represented using a markup language, and that language can be typically expressed in XML (extensible Markup Language). The contents may include unique manufacturing information of each vendor, such as an equipment model name, a unique serial number of equipment, a manufacturer name, and a manufacturer URL. The contents may also include a list of embedded equipment and its service as well as a URL for control, eventing and presentation operations which will be described later.

A main UPnP operation is performed after the addressing, discovery and description operations and is formed through the control, eventing and presentation operations.

With regard to the control operation, the CP 10 performs an essential task for controlling the equipment after performing the description operation of the CD 20. The CP transmits an operation command for a service provided by the CD 20 in order to control the equipment. In order to do that, the CP 10 transmits an appropriate control message to a control URL for the corresponding service described in an equipment description. The control message is expressed in XML, and SOAP (Simple Object Access Protocol) is used to transmit or receive the control message. The corresponding service generates a specific value or an error code in response to the received control message.

With regard to the eventing operation, each of the CDs informs the CP 10 of its change of state. At this time, the CD 20 use an event message defined in the UPnP.

Such a message includes one or more state variable names and current values for the variable names, and is expressed in an XML format and formatted through a GENA (Generic Event Notification Architecture). At this time, the GENA is one layer of layers constructing a UPnP protocol stack, and 'www.upnp.org' which defines a standard rule of the UPnP can be referred to for more information.

Event contents can be periodically updated and informed to the CP, and a subscription can be cancelled using the GENA.

With regard to the presentation operation, when the CD 20 has a URL for the presentation operation, the CP 10 can search for a page through the URL for the presentation operation and load the page to a browser, and users can control the equipment or check a state of the equipment using the page. Levels to which such functions can be performed depend upon a presentation page and a specific function of the equipment. Operations that can be applied to the UPnP in connection with the present invention are the discovery operation and the description operation.

Whenever a new CP participates in the network, the CP searches for a CD to which the CP requests a service among CDs connected to the network. And whenever a new CD participates in the network, the CD informs the CP connected to the network of a service which the CD can provide. Accordingly, when the network equipment participating in the network is frequently changed or a configuration of the network equipment participating in the network is periodically changed, many discovery messages are generated so that network traffic occurs. Furthermore, a packet transmission and reception rate between networks in a wireless network environment is lower than that of a wired network environment due to a network characteristic. Furthermore, if the network traffic is occurred, there is a problem that the packet transmission and reception rate is remarkably reduced.

Also, in the case that the CP receives service contents from the CD, a problem occurs that it takes a great deal of time if there are a lot of content or documents.

That is, while equipment information or service information should be exchanged between the network equipment connected to the network in order to process a specific service, there occur problems in the UPnP that network efficiency reduces since a new packet is generated whenever new network equipment participates in the network, and network traffic is generated since a large volume of service information is exchanged.

Accordingly, it becomes necessary to provide a method for performing a desired service by exchanging the service information between the equipment connected to the network without increasing loads of the network.

EP-A-1 345 385 discloses an apparatus and method for providing information on home network devices via the internet, according to the precharacterising portion of claim 1.

WO-A-02/096139 discloses an apparatus and method for synchronization of stored service parameters in a communication system, specifically a mobile communication system. A mobile station generates a cyclic redundancy check (CRC) of a configuration transmitted to it by a base station. To transmit, the mobile station sends a CRC as a SYNC_ID to the base station which compares the SYNC_ID with the CRC stored in the base station. If there is a match, the stored configuration is used for the communication session.

"Universal Plug and Play Device Architecture, UpnP, Version 1.0" is an architecture description for UpnP.

An aim of preferred embodiments of the present invention is to provide a method and apparatus for preventing an increase of network traffic generated when network equipment participates in a network by managing information regarding the network equipment and services provided by the network equipment in the form of database and by checking whether the information is updated.

According to a first aspect of the present invention, there is provided apparatus for requesting a service provided by network equipment connected to a network, the apparatus comprising:
a database for storing equipment identification information regarding network equipment and detailed information regarding a service provided by the network equipment;
a database access module for accessing the database; and
a packet process module for processing a service information packet which is transmitted and received through the network and communicating with the database access module;
wherein the packet process module comprises a service request management module for communication with the database access module and the network and for receiving identification information for network equipment connected to the network;
characterised in that the packet process module further comprises a service comparison module; and wherein
the database access module is adapted to determine whether the received identification information for network equipment connected to the network has been previously stored in the database;
the service request management module is adapted to request and receive service change information regarding a service provided by the network equipment identified by the equipment identification information, if it is determined that the received equipment identification information received has been previously stored in the database and to transmit the received service charge information to the service information comparison module;
the service information comparison module is adapted to determine whether the detailed information regarding the service provided by the network equipment is stored in the database has changed based on the service change information; and
the service request management module is adapted to transmit a request for the service corresponding to the detailed information regarding the service stored in the database, if it is determined by the service information comparison module that the detailed information stored in the database has not changed.

The equipment identification information may include information indicating the type of the equipment, a serial number used to identify the equipment, or reference information for a service provided by the network equipment.

The service information comparison module may determine whether the detailed information on service stored in the database has been changed using a value of 'Last-modified' included in a response packet for a packet transmitted using a HEAD method of a HyperText Transfer Protocol (HTTP), in order that the service request management module can determine whether the detailed information on service has been changed.

Preferably, the service information comparison module determines whether the detailed information on service stored in the database has been changed using desired flag information indicating whether the detailed information on service among information included in a packet received from the service request management module has been changed, in order that the service request management module determines whether the detailed information on service has been changed.

According to a second aspect of the present invention, there is provided a method for requesting a service provided by network equipment, the method comprising: (a) connecting a network device to a network, the network device including a database; (b) receiving at the network device equipment identification information for the network equipment connected to the network; characterised by: (c) determining whether the equipment identification information received by the network device has been previously stored in the database; (d) transmitting from the network device a request for service change information regarding a service provided by the network equipment identified by the equipment identification information, if it is determined that the equipment identification information received by the network device has been previously stored in the database; (e) determining at the network device whether detailed information regarding the service provided by the network equipment stored in the database has changed based on the service change information which is received from the network equipment; and transmitting from the network device a request for the service corresponding to the detailed information regarding the service provided by the network equipment, if it is determined that the detailed information stored in the database has not changed.

Step (d) may include requesting service change information for the service provided by the network equipment to the network equipment which is identified by the collected equipment identification information using a HEAD method of a HTTP.

Step (d) may include: requesting the detailed information regarding the service provided by the network equipment from the network equipment identified by the collected equipment identification information, when the network device does not have the collected equipment identification information; enabling the network device to receive the detailed information regarding the service from the network equipment; enabling the network device to store the received detailed information regarding the service in the database; and enabling the network device to request a service corresponding to the detailed information regarding the service from the network equipment.

Step (e) may include determining whether the detailed information on service provided by the network equipment stored in the database has been changed using a value of 'Last-modified' in a 'HEADER' of a packet which the network device has received from the network equipment through a HTTP.

Step (e) may include whether the detailed information regarding the service provided by the network equipment stored in the database has been changed using desired flag information indicating whether the detailed information on service among information included in the packet which the network device has received from the network equipment has been changed.

Step (f) may include: requesting the detailed information on service provided by the network equipment from the network equipment which is identified by the collected equipment identification information, when the detailed information regarding the service has been changed; enabling the network device to receive the detailed information on service from the network equipment; enabling the network device to store the received detailed information regarding the service in the database; and enabling the network device to request a service corresponding to the detailed information regarding the service from the network equipment.

Further features of the present invention are set out in the appended claims.

The present invention will become more apparent to those of ordinary skill in the art by describing in detail exemplary embodiments thereof, by way of example only, with reference to the attached drawings in which:
FIG. 1 is a block diagram showing a general UPnP operation;
FIG. 2 is a block diagram showing a configuration used to perform an operation by a service request apparatus in accordance with an exemplary embodiment of the present invention;
FIG. 3 is a block diagram showing a configuration to enable a service request apparatus to perform an operation in accordance with an exemplary embodiment of the present invention;
FIG. 4 is a block diagram showing a configuration to enable a service request apparatus to perform an operation in accordance with an exemplary embodiment of the present invention; and
FIG. 5 is a process flow chart showing a service request method provided by network equipment in accordance with an exemplary embodiment of the present invention.

The present invention will now be described more fully hereinafter with reference to the accompanying drawings, in which exemplary embodiments of the invention are shown. This invention may, however, be embodied in different forms and should not be construed as limited to the exemplary embodiments set forth herein. Rather, the exemplary embodiments are provided so that this disclosure will be thorough and complete, and will fully convey the scope of the invention to those skilled in the art. In the drawings, the thickness of layers and regions are exaggerated for clarity. Like numbers refer to like elements throughout the specification.

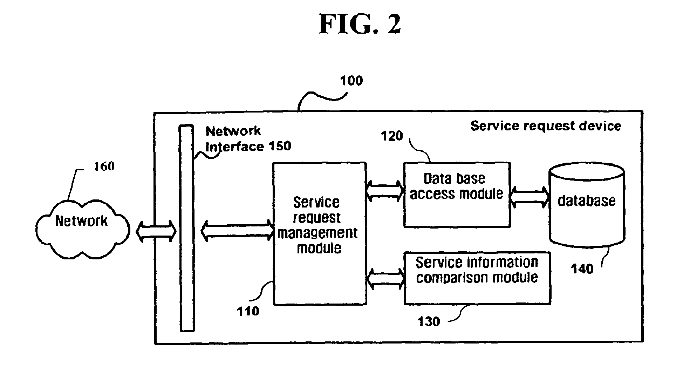

FIG. 2 is a block diagram showing a configuration used to perform an operation by a service request apparatus in accordance with an exemplary embodiment of the present invention. At this time, each of modules or blocks shown in FIG. 2 can be implemented by hardware and/or software.

A service request apparatus 100 requests a desired service from other network equipment connected to a network 160. The service request apparatus 100 includes a database 140 for storing equipment identification information used to identify each network equipment (not shown) connected to the network 160 and detailed information for services provided by the network equipment, a database access module 120 for searching for or extracting information stored in the database 140, or storing new information in the database 140, a service request management module 110 for analyzing a packet transmitted and received through a network interface 150 and exchanging a message with other modules such as the database access module 120 in accordance with the kind of the packet, and a service information comparison module 130 for determining whether service information requested by the apparatus 100 is changed.

Hereinafter, an operation process for the service request apparatus 100 shown in FIG. 2 will be explained.

Network equipment connected to the network 160 can be classified according to its function. That is, there exists network equipment for providing other network equipment with a specific service (hereinafter referred to as a 'service providing apparatus') and network equipment for requesting a specific service from other network equipment (hereinafter referred to as a 'service requesting apparatus'). There may exist network equipment having both a service providing function and a service requesting function.

When the service requesting apparatus 100 is connected to the network 160, the service requesting management module 110 collects equipment identification information regarding the network equipment capable of performing a service requested by the service requesting apparatus 100. At this time, the equipment identification information includes information indicating the type of equipment and a serial number to identify the network equipment. The equipment identification information may include reference information indicating the kind of service or detailed contents, which can be provided by the network equipment.
A method by which the service requesting management module 110 collects the equipment identification information includes a method for collecting the information wherein the service requesting management module 110 transmits a request packet for requesting the equipment identification information to all network equipment connected to the network 160 and receives a response packet in response to the transmission, and another method where, when the service request apparatus 100 is connected to the network 160, the network equipment already connected to the network 160 provides the service request apparatus 100 with its equipment identification information.

When the service request management module 110 has collected the equipment identification information, it transmits the collected information to the database access module 120. The database access module 120 determines whether the collected equipment identification information has been previously stored in the database 140.

When the collected equipment identification information has been already stored in the database 140, the database access module 120 transmits a message indicating that the collected equipment identification information is stored in the database 140 to the service request management module 110. The service request management module 110 then transmits a packet requesting service change information to the network equipment identified by the collected equipment identification information. At this time, the service change information means information indicating whether a document describing a service content provided by the network equipment has been changed, and it can make use of header information of a packet transmitted and received by a desired communication protocol. When the service request management module 110 determines the type of the packet received from the network interface 150, and the type of the received packet is a response packet with respect to the packet requesting the service change information, the received packet is transmitted to the service information comparison module 130. The service information comparison module 130 analyzes the received packet, determines whether a document describing a service content provided by the network equipment which has transmitted the packet is changed, and transmits its result to the service request management module 110. When the document was not changed, the service request management module 110 extracts the service content stored in the database 140 in order to make use of the service provided by the corresponding network equipment and requests the service to the corresponding network equipment. However, when the document was changed, the service request management module 110 transmits a packet requesting a detailed content of the service provided by the network equipment to the corresponding network equipment, receives the detailed content of the service provided by the network equipment from the network equipment and allows the database access module 120 to store the received content in the database 140. On the other hand, while it may be possible to allow the service request management module 110 to perform the function performed by the service information comparison module 130, it depends upon a programmer's choice embodying software actually.

When the same information as the equipment identification information collected by the service request management module 110 has not been stored in the database 140, the database access module 120 transmits a message indicating that the equipment identification information was not stored in the database 140 to the service request management module 110. The service request management module 110 then requests a detailed content of the service provided by the network equipment to the network equipment identified by the equipment identification information, and allows the database access module 120 to store the equipment identification information and the detailed content of the service in the database 140 when receiving the detailed content of the service.

Hereinafter, an explanation will be given where an embodiment of the present invention is applied to a UPnP corresponding to a home network standard, which is another example of the present invention.

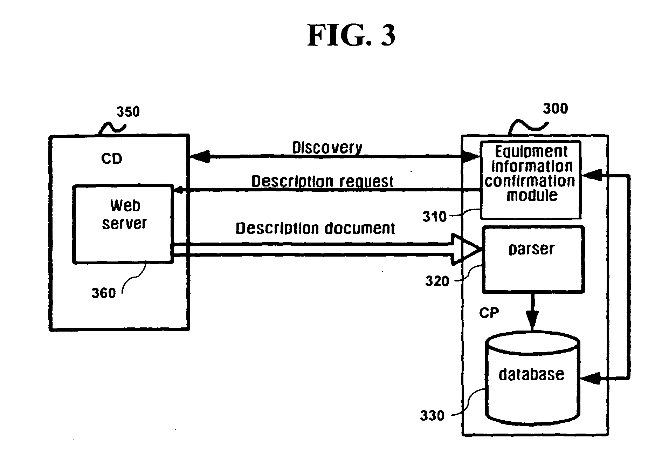

FIG. 3 is a block diagram showing configuration to enable a service request apparatus to perform an operational process in the case that a CP discovered a new CD after being connected to a network in accordance with an exemplary embodiment the present invention.

When a CP 300 is connected to a network, it performs a discovery operation with regard to the CDs connected to the network. It is assumed that a CD 350 provides a service which the CP 300 wants. In the discovery operation, an equipment information confirmation module 310 operating in the CP 300 searches for equipment identification information for the CD 350 in a database 330. At this time, the equipment identification information is information uniquely identifying network equipment, which may include reference information indicating a service content provided by the network equipment. When the equipment identification information does not exist in the database 330, the CP 300 determines the equipment as new network equipment found in the connected network. Accordingly, the CP 300 transmits to a web server 360 of the CD 350 a request for a description document which includes a service content provided by the CD 350. The web server 360 transmits the description document to the CP 300 in response to the request.

The CP 300 receives the description document and at the same time performs an extraction task in order that a parser 320 operating in the CP 300 changes service information provided by the CD 350 to a desired data structure. The data structure can be differently constructed according to the type of the CP, and constructed as a mapping structure between equipment identification information and service content information.

The data structure generated by the parser 320 is stored in the database 330 together with the equipment identification information of the CD 350 received during the discovery operation. At this time, the database 330 can be constructed as a desired file system in a physical storage area.

The CP 300 can transmit a service request to the CD 350 using information stored in the database 330.

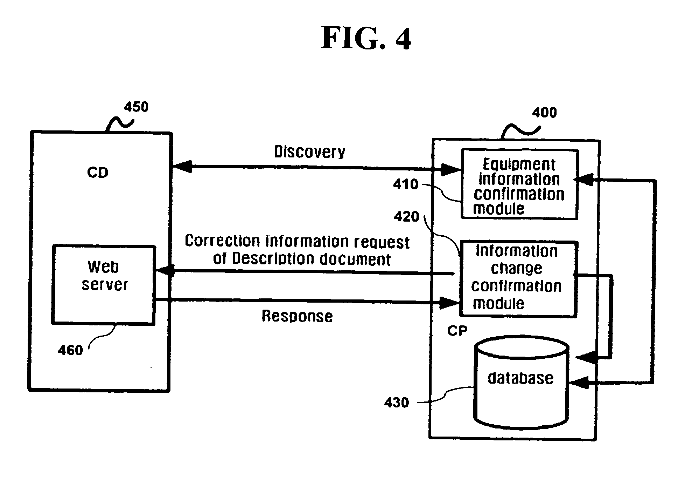

FIG. 4 is a block diagram showing a configuration to enable a service request apparatus to perform an operational process in the case that a CP discovers an existing CD after being connected to a network in accordance with an exemplary embodiment of the present invention.

When the CP 400 is connected to a network, it performs a discovery operation with regard to CDs connected to the network. It is assumed that a CD 450 that provides a service which the CP 400 wants. In the discovery operation, an equipment information confirmation module 410 operating in the CP 400 searches for equipment identification information for the CD 450 in a database 430. At this time, the equipment identification information is information uniquely identifying network equipment, which may include reference information indicating a service content provided by the network equipment.

When the equipment identification information exists in the database 430, a service content provided by the CD 450 is also regarded as being existed in the database 430. In this case, since the service content can be changed, an information change confirmation module 420 of the CP 400 transmits a request to a web server 460 of the CD 450 to provide correction information indicating whether a description document has changed.

At this time, a 'HEAD method' provided in HTTP 1.0/1.1 can be used for the CP 400 to request the correction information to the CD 450. The quantity of information in the 'HEAD method' is less than that in a 'GET method' used to request the description document. It is because the 'HEAD method' provided in the HTTP 1.0/1.1 uses only a part containing information for a document, for example, a header of the document and 'GET method' uses the total document. Accordingly, since only a 'HEADER' part excluding a 'BODY' part which is a content of the Description document is transmitted in the case that the 'HEAD method' is used instead of the 'GET method' requesting the document totally, information on a service provided by the network equipment can be obtained without increasing network traffic. Additionally, since there is no description document parsing process, it is possible to request the service provided by the network equipment more rapidly.

The web server 460 that is requested to provide the correction information transmits a response including the correction information to the CP 400, and the information change confirmation module 420 that has received the correction information analyzes the correction information.

To analyze the correction information, it is determined whether values of 'Last-modified' in the 'HEADER' of a response packet prescribed in the HTTP are the same. In the HTTP, date and time when the corresponding document is finally changed are provided as the values of "Last-modified'. Accordingly, if a value of 'Last-modified' received by the CP 400 and a value of 'Last-modified' in a header of the description document for the CD 450 stored already in the database 430 are compared, it can be known whether the document is changed. Alternatively, in the case that the web server 460 transmits a response packet for a correction information request, a flag indicating whether the description document has been changed is established in a specific part of the packet and the CP 400 checks the flag, so that it is known whether the Description document has been updated.

If it is confirmed that the description document of the CD 450 has not been changed, a service content corresponding to the equipment identification information of the CD 450 is extracted from the database 430, and the CP 400 requests a desired service from the CD 450.

If it is confirmed that the description document of the CD 450 has been changed, the equipment information confirmation module 410 requests a changed description document from the web server 460 in the CD 450 as shown in FIG. 3, and the CD 450 transmits the description document describing its service content provided by the CD 450 to the CP 400. The equipment information confirmation module 410 stores the description document received from the CD 450 in the database 430.

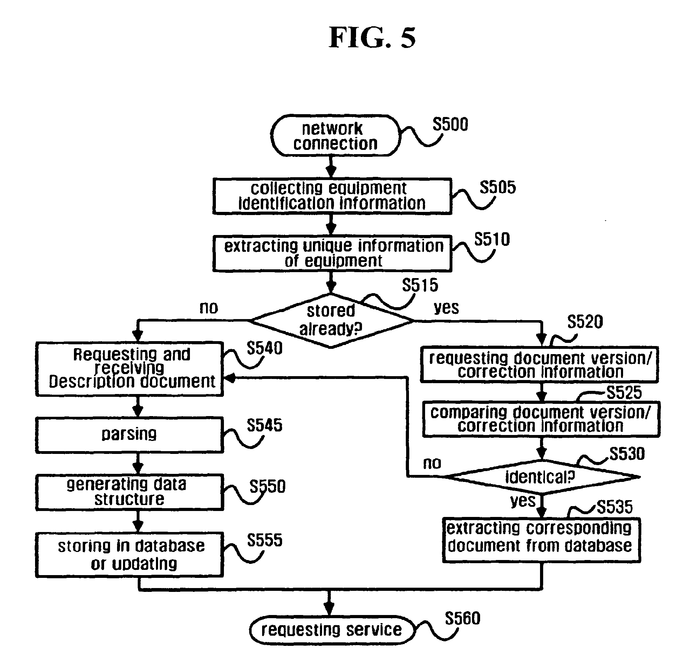

FIG. 5 is a process flow chart showing a service request method provided by network equipment in accordance with an exemplary embodiment of the present invention. Referring to FIG. 5, an explanation will be given in which the UPnP standard is applied in the exemplary embodiment of the present invention.

When a CP is connected to a network (S500), equipment identification information for the CD connected to the network is collected (S505). At this time, the equipment identification information may include information regarding the type of the equipment, a serial number used to identify the equipment, and so on, and may include reference information used to indicate the kind of service provided by the equipment and its detailed content.

After the CP selects equipment identification information on the CD which provides a service requested by the CP, it extracts a unique equipment number in the equipment identification information, for example, a unique serial number used to identify the equipment (S510).

If the CP already stores the unique serial number, a packet requesting document version/correction information is transmitted to the CD in order to check out whether the description document provided by the CD has been changed (S515 and S520). If the CP receives a response packet for the packet from the CD, the CP compares document correction information included in the received response packet with document correction information for the CD stored in the CP (S525). That is, it is determined whether values of 'Last-modified' in 'HEADER' of the response packet prescribed in the HyperText Transfer Protocol (HTTP) are the same (S530). As another embodiment, in the case that the web server 460 transmits a response packet for the correction information request, it may be possible to identify whether the description document was updated by establishing a flag indicating whether the description document was changed in a specific part of the packet and checking the flag by the CP 400.

If the document correction information included in the received response packet and the document correction information for the CD stored in the CP are determined to be same as a result of the comparison in the step S525, the CP extracts the corresponding document is extracted from the database in the CP (S535) and requests the corresponding service to the CD (S560).

If the CP has not stored the unique serial number in the step S515, the CP requests the description document to the CD, and receives the description document from the CD (S540). And then, the CP parses the received description document (S545), constructs a data structure to be stored in the database (S545), and stores the data structure in the database (S550). On the other hand, values of 'Last-modified' in HEADER' of the response packet are not same as a result of the comparison in the step S530, step S540 is performed.

Although the exemplary embodiments and drawings of the present invention have been disclosed for illustrative purposes, those skilled in the art appreciate that various substitutions, modifications, changes and additions are possible, without departing from the scope of the invention as disclosed in the accompanying claims.

There is an effect that an increase of network traffic can be prevented and network equipment can be quickly operated by managing information to identify the network equipment and service information provided by the network equipment using a separated storage area using preferred embodiments of the present invention. Also, reliability of information can be enhanced by checking whether the stored information is updated.

## Claims

1. A method for requesting a service provided by network equipment, the method comprising:
(a) connecting a network device (100) to a network (160), the network device including a database (140);
(b) receiving at the network device (100) equipment identification information for the network equipment connected to the network; **characterised by**:
(c) determining whether the equipment identification information received by the network device (100) has been previously stored in the database (140);
(d) transmitting from the network device (100) a request for service change information regarding a service provided by the network equipment identified by the equipment identification information, if it is determined that the equipment identification information received by the network device (100) has been previously stored in the database (140);
(e) determining at the network device (100) whether detailed information regarding the service provided by the network equipment stored in the database (140) has changed based on the service change information which is received from the network equipment; and
(f) transmitting from the network device (100) a request for the service corresponding to the detailed information regarding the service provided by the network equipment, if it is determined that the detailed information stored in the database (140) has not changed.

2. The method according to claim 1, wherein the equipment identification information includes information indicating a type of the network equipment, a serial number used to identify the network equipment, or reference information for the service provided by the network equipment.

3. The method according to claim 1 or claim 2, wherein step (d) comprises transmitting from the network device the request for the service change information regarding the service provided by the network equipment identified by the equipment identification information based on a HEAD method of a HyperText Transfer Protocol (HTTP).

4. The method according to any preceding claim, wherein step (e) comprises determining whether the detailed information regarding the service provided by the network equipment stored in the database (140) has changed based on a 'Last-modified' value in a 'HEADER' of a packet which the network device has received from the network equipment through a HyperText Transfer Protocol (HTTP).

5. The method according to any one of claims 1-3, wherein step (e) comprises determining whether the detailed information regarding the service provided by the network equipment stored in the database (140) has changed based on desired flag information indicating whether the detailed information regarding the service among information included in a packet which the network device has received from the network equipment has changed.

6. The method according to claim 1 or claim 2, wherein step (d) comprises:
transmitting a request for the detailed information regarding service provided by the network equipment identified by the equipment identification information, if it is determined that the equipment identification information has not been previously stored in the database (140);
receiving at the network device (100) the detailed information regarding the service from the network equipment;
storing the detailed information regarding the service in the database (140); and
transmitting from the network device (100) a request for the service corresponding to the detailed information regarding the service provided by the network equipment.

7. The method according to any preceding claim, wherein step (f) comprises:
transmitting a request for the detailed information regarding the service provided by the network equipment identified by the equipment identification information, if it is determined that the detailed information stored in the database (140) has changed;
receiving at the network device (100) the detailed information regarding the service from the network equipment;
storing in the database (140) the detailed information regarding the service received from the network equipment; and
transmitting from the network device (100) a request for the service corresponding to the detailed information regarding the service provided by the network equipment.

8. An apparatus for requesting a service provided by network equipment connected to a network, the apparatus comprising:
a database (140) for storing equipment identification information regarding network equipment and detailed information regarding a service provided by the network equipment;
a database access module (120) for accessing the database (140); and
a packet process module (110, 130) for processing a service information packet which is transmitted and received through the network and communicating with the database access module (120);
wherein the packet process module (110, 130) comprises a service request management module (110) for communication with the database access module (120) and the network (160) and for receiving identification information for network equipment connected to the network;
**characterised in that** the packet process module (110, 130) further comprises a service information comparison module (130); and wherein
the database access module (120) is adapted to determine whether the received identification information for network equipment connected to the network has been previously stored in the database (140);
the service request management module (110) for communication is adapted to request and receive service change information regarding a service provided by the network equipment identified by the equipment identification information, if it is determined that the received equipment identification information received has been previously stored in the database (140); and to transmit the received service charge information to the service information comparison module (130);
the service information comparison module (130) is adapted to receive said service change information is adapted to determine whether the detailed information regarding the service provided by the network equipment stored in the database (140) has changed based on the service change information, and
the service request management module (110) is adapted to transmit a request for the service corresponding to the detailed information regarding the service stored in the database (140), if it is determined by the service information comparison module (130) that the detailed information stored in the database (140) has not changed.

9. The apparatus according to claim 8, wherein the equipment identification information includes information indicating a type of the network equipment, a serial number used to identify the network equipment, or reference information for the service provided by the network equipment.

10. The apparatus according to claim 9, wherein the service information comparison module (130) is adapted to determine whether the detailed information regarding the service stored in the database (140) has changed based on a 'Last-modified' value included in a packet received from the network equipment using a HEAD method of a HyperText Transfer Protocol (HTTP).

11. The apparatus according to claim 9, wherein the service information comparison module (130) is adapted to determine whether the detailed information regarding the service stored in the database (140) has changed based on flag information indicating whether the detailed information regarding the service among information included in a packet received from the network equipment by the service request management module (110) has changed.

## Patentansprüche

1. Verfahren zum Anfordern eines Dienstes, der durch Netzwerkausrüstung bereitgestellt wird, wobei das Verfahren umfasst:
(a) Verbinden einer Netzwerkvorrichtung (100) mit einem Netzwerk (160), wobei die Netzwerkvorrichtung eine Datenbank (140) enthält;
(b) Empfangen, an der Netzwerkvorrichtung (100), von Ausrüstungsidentifizierungsinformationen für die Netzwerkausrüstung, die mit dem Netzwerk verbunden ist; **gekennzeichnet durch**:
(c) Feststellen, ob die Ausrüstungsidentifizierungsinformationen, die **durch** die Netzwerkvorrichtung (100) empfangen wurden, zuvor in der Datenbank (140) gespeichert worden sind;
(d) Senden, von der Netzwerkvorrichtung (100), einer Anforderung von Dienständerungsinformationen in Bezug auf einen Dienst, der **durch** die Netzwerkausrüstung bereitgestellt wird, die **durch** die Ausrüstungsidentifizierungsinformationen identifiziert wird, falls festgestellt wird, dass die Ausrüstungsidentifizierungsinformationen, die **durch** die Netzwerkvorrichtung (100) empfangen wurden, zuvor in der Datenbank (140) gespeichert worden sind;
(e) Feststellen, an der Netzwerkvorrichtung (100), ob sich ausführliche Informationen in Bezug auf den **durch** die Netzwerkausrüstung bereitgestellten Dienst, die in der Datenbank (140) gespeichert sind, auf Basis der Dienständerungsinformationen, die von der Netzwerkausrüstung empfangen werden, geändert haben; und
(f) Senden, von der Netzwerkvorrichtung (100), einer Anforderung des Dienstes entsprechend den ausführlichen Informationen in Bezug auf den **durch** die Netzwerkausrüstung bereitgestellten Dienst, falls festgestellt wird, dass sich die ausführlichen Informationen, die in der Datenbank (140) gespeichert sind, nicht geändert haben.

2. Verfahren nach Anspruch 1, wobei die Ausrüstungsidentifizierungsinformationen Informationen enthalten, die einen Typ der Netzwerkausrüstung, eine Seriennummer, die zum Identifizieren der Netzwerkausrüstung verwendet wird, oder Bezugsinformationen für den Dienst, der durch die Netzwerkausrüstung bereitgestellt wird, anzeigen.

3. Verfahren nach Anspruch 1 oder Anspruch 2, wobei der Schritt (d) Senden der Anforderung der Dienständerungsinformationen in Bezug auf den Dienst, der durch die Netzwerkausrüstung bereitgestellt wird, die durch die Ausrüstungsidentifizierungsinformationen identifiziert wird, von der Netzwerkvorrichtung auf Basis eines HEAD-Verfahrens eines HyperText Transfer Protocol (HTTP) umfasst.

4. Verfahren nach einem vorhergehenden Anspruch, wobei der Schritt (e) Feststellen umfasst, ob sich die ausführlichen Informationen in Bezug auf den durch die Netzwerkausrüstung bereitgestellten Dienst, die in der Datenbank (140) gespeichert sind, auf Basis eines "Last-Modified-Wertes" in einem "HEADER" eines Pakets, das die Netzwerkvorrichtung über ein HyperText Transfer Protocol (HTTP) von der Netzwerkausrüstung empfangen hat, geändert haben.

5. Verfahren nach einem der Ansprüche 1 bis 3, wobei der Schritt (e) Feststellen umfasst, ob sich die ausführlichen Informationen in Bezug auf den durch die Netzwerkausrüstung bereitgestellten Dienst, die in der Datenbank (140) gespeichert sind, auf Basis gewünschter Flaggeninformationen geändert haben, die anzeigen, ob sich die ausführlichen Informationen in Bezug auf den Dienst aus Informationen, die in einem Paket enthalten sind, das die Netzwerkvorrichtung von der Netzwerkausrüstung empfangen hat, geändert haben.

6. Verfahren nach Anspruch 1 oder Anspruch 2, wobei der Schritt (d) umfasst:
Senden einer Anforderung der ausführlichen Informationen in Bezug auf einen Dienst, der durch die Netzwerkausrüstung bereitgestellt wird, die durch die Ausrüstungsidentifizierungsinformationen identifiziert wird, falls festgestellt wird, dass die Ausrüstungsidentifizierungsinformationen nicht zuvor in der Datenbank (140) gespeichert worden sind;
Empfangen, an der Netzwerkvorrichtung (100), der ausführlichen Informationen in Bezug auf den Dienst von der Netzwerkausrüstung;
Speichern der ausführlichen Informationen in Bezug auf den Dienst in der Datenbank (140); und
Senden, von der Netzwerkvorrichtung (100), einer Anforderung des Dienstes entsprechend den ausführlichen Informationen in Bezug auf den Dienst, der durch die Netzwerkausrüstung bereitgestellt wird.

7. Verfahren nach einem vorhergehenden Anspruch, wobei der Schritt (f) umfasst:
Senden einer Anforderung der ausführlichen Informationen in Bezug auf den Dienst, der durch die Netzwerkausrüstung bereitgestellt wird, die durch die Ausrüstungsidentifizierungsinformationen identifiziert wird, falls festgestellt wird, dass sich die ausführlichen Informationen, die in der Datenbank (140) gespeichert sind, geändert haben;
Empfangen, an der Netzwerkvorrichtung (100), der ausführlichen Informationen in Bezug auf den Dienst von der Netzwerkausrüstung;
Speichern, in der Datenbank (140), der ausführlichen Informationen in Bezug auf den Dienst, die von der Netzwerkausrüstung empfangen werden; und
Senden, von der Netzwerkvorrichtung (100), einer Anforderung des Dienstes entsprechend den ausführlichen Informationen in Bezug auf den Dienst, der durch die Netzwerkausrüstung bereitgestellt wird.

8. Vorrichtung zum Anfordern eines Dienstes, der durch Netzwerkausrüstung bereitgestellt wird, die mit einem Netzwerk verbunden ist, wobei die Vorrichtung umfasst:
eine Datenbank (140) zum Speichern von Ausrüstungsidentifizierungsinformationen in Bezug auf Netzwerkausrüstung und ausführlichen Informationen in Bezug auf einen Dienst, der durch die Netzwerkausrüstung bereitgestellt wird;
ein Datenbankzugriffsmodul (120) zum Zugreifen auf die Datenbank (140); und
ein Paketverarbeitungsmodul (110, 130) zum Verarbeiten eines Dienstinformationspakets, das über das Netzwerk gesendet und empfangen wird, und zum Kommunizieren mit dem Datenbankzugriffsmodul (120);
wobei das Paketverarbeitungsmodul (110, 130) ein Dienstanforderungsverwaltungsmodul (110) zum Kommunizieren mit dem Datenbankzugriffsmodul (120) und dem Netzwerk (160) und zum Empfangen von Identifizierungsinformationen für Netzwerkausrüstung, die mit dem Netzwerk verbunden ist, umfasst;
**dadurch gekennzeichnet, dass** das Paketverarbeitungsmodul (110, 130) des Weiteren ein Dienstinformationsvergleichsmodul (130) umfasst; und wobei
das Datenbankzugriffsmodul (120) eingerichtet ist, um festzustellen, ob die empfangenen Identifizierungsinformationen für Netzwerkausrüstung, die mit dem Netzwerk verbunden ist, zuvor in der Datenbank (140) gespeichert worden ist;
das Dienstanforderungsverwaltungsmodul (110) zum Kommunizieren eingerichtet ist, um Dienständerungsinformationen in Bezug auf einen Dienst, der durch die Netzwerkausrüstung bereitgestellt wird, die durch die Ausrüstungsidentifizierungsinformationen identifiziert wird, anzufordern und zu empfangen, falls festgestellt wird, dass die empfangenen Ausrüstungsidentifizierungsinformationen zuvor in der Datenbank (140) gespeichert worden sind; und um die empfangenen Dienständerungsinformationen zu dem Dienstinformationsvergleichsmodul (130) zu senden;
das Dienstinformationsvergleichsmodul (130) eingerichtet ist, um die Dienständerungsinformationen zu empfangen, und eingerichtet ist, um festzustellen, ob sich die ausführlichen Informationen in Bezug auf den durch die Netzwerkausrüstung bereitgestellten Dienst, die in der Datenbank (140) gespeichert sind, auf Basis der Dienständerungsinformationen geändert haben; und
das Dienstanforderungsverwaltungsmodul (110) eingerichtet ist, um eine Anforderung des Dienstes entsprechend den ausführlichen Informationen in Bezug auf den Dienst, die in der Datenbank (140) gespeichert sind, zu senden, falls durch das Dienstinformationsvergleichsmodul (130) festgestellt wird, dass sich die ausführlichen Informationen, die in der Datenbank (140) gespeichert sind, nicht geändert haben.

9. Vorrichtung nach Anspruch 8, wobei die Ausrüstungsidentifizierungsinformationen Informationen enthalten, die einen Typ der Netzwerkausrüstung, eine Seriennummer, die zum Identifizieren der Netzwerkausrüstung verwendet wird, oder Bezugsinformationen für den Dienst, der durch die Netzwerkausrüstung bereitgestellt wird, anzeigen.

10. Vorrichtung nach Anspruch 9, wobei das Dienstinformationsvergleichsmodul (130) eingerichtet ist, um festzustellen, ob sich die ausführlichen Informationen in Bezug auf den Dienst, die in der Datenbank (140) gespeichert sind, auf Basis eines Last-Modified-Wertes geändert haben, der in einem Paket enthalten ist, das von der Netzwerkausrüstung unter Verwendung eines HEAD-Verfahrens eines HyperText Transfer Protocol (HTTP) empfangen worden ist.

11. Vorrichtung nach Anspruch 9, wobei das Dienstinformationsvergleichsmodul (130) eingerichtet ist, um festzustellen, ob sich die ausführlichen Informationen in Bezug auf den Dienst, die in der Datenbank (140) gespeichert sind, auf Basis von Flaggeninformationen geändert haben, die anzeigen, ob sich die ausführlichen Informationen in Bezug auf den Dienst aus Informationen, die in einem Paket enthalten sind, das das Dienstanforderungsverwaltungsmodul (110) von der Netzwerkausrüstung empfangen hat, geändert haben.

## Revendications

1. Procédé pour demander un service fourni par un équipement de réseau, le procédé comprenant les étapes consistant à :
(a) connecter un dispositif de réseau (100) à un réseau (160), le dispositif de réseau comprenant une base de données (140) ;
(b) recevoir au niveau du dispositif de réseau (100) des informations d'identification d'équipement pour l'équipement de réseau connecté au réseau ; **caractérisé en ce qu'**il comprend l'étape consistant à :
(c) déterminer si les informations d'identification d'équipement reçues par le dispositif de réseau (100) ont été précédemment stockées dans la base de données (140) ;
(d) transmettre à partir du dispositif de réseau (100) une demande pour des informations de changement de service concernant un service fourni par l'équipement de réseau identifiée par les informations d'identification d'équipement, s'il est déterminé que les informations d'identification d'équipement reçues par le dispositif de réseau (100) ont été précédemment stockées dans la base de données (140) ;
(e) déterminer au niveau du dispositif de réseau (100) si des informations détaillées concernant le service fourni par l'équipement de réseau stockées dans la base de données (140) ont changé sur la base des informations de changement de service qui sont reçues à partir de l'équipement de réseau ; et
(f) transmettre à partir du dispositif de réseau (100) une demande pour le service correspondant aux informations détaillées concernant le service fourni par l'équipement de réseau, s'il est déterminé que les informations détaillées stockées dans la base de données (140) n'ont pas changé.

2. Procédé selon la revendication 1, dans lequel les informations d'identification d'équipement comprennent des informations indiquant un type de l'équipement de réseau, un numéro de série utilisé pour identifier l'équipement de réseau, ou des informations de référence pour le service fourni par l'équipement de réseau.

3. Procédé selon la revendication 1 ou la revendication 2, dans lequel l'étape (d) comprend la transmission à partir du dispositif de réseau de la demande pour les informations de changement de service concernant le service fourni par l'équipement de réseau identifié par les informations d'identification d'équipement sur la base d'un procédé HEAD d'un protocole de transfert hypertexte (HTTP).

4. Procédé selon l'une quelconque des revendications précédentes, dans lequel l'étape (e) comprend le fait de déterminer si les informations détaillées concernant le service fourni par l'équipement de réseau stockées dans la base de données (140) ont changé sur la base d'une valeur « dernièrement modifiée » dans un « en-tête » d'un paquet qu'a reçu le dispositif de réseau à partir de l'équipement de réseau par un protocole de transfert hypertexte (HTTP).

5. Procédé selon l'une quelconque des revendications 1 à 3, dans lequel l'étape (e) comprend le fait de déterminer si les informations détaillées concernant le service fourni par l'équipement de réseau stockées dans la base de données (140) ont changé sur la base d'informations d'indication souhaitées indiquant si les informations détaillées concernant le service parmi les informations incluses dans un paquet qu'a reçu le dispositif de réseau à partir de l'équipement de réseau ont changé.

6. Procédé selon la revendication 1 ou la revendication 2, dans lequel l'étape (d) comprend :
la transmission d'une demande pour les informations détaillées concernant le service fourni par l'équipement de réseau identifiée par les informations d'identification d'équipement, s'il est déterminé que les informations d'identification d'équipement n'ont pas été précédemment stockées dans la base de données (140) ;
la réception au niveau du dispositif de réseau (100) des informations détaillées concernant le service à partir de l'équipement de réseau ;
le stockage des informations détaillées concernant le service dans la base de données (140) ; et
la transmission à partir du dispositif de réseau (100) d'une demande pour le service correspondant aux informations détaillées concernant le service fourni par l'équipement de réseau.

7. Procédé selon l'une quelconque des revendications précédentes, dans lequel l'étape (f) comprend :
la transmission d'une demande pour les informations détaillées concernant le service fourni par l'équipement de réseau identifiée par les informations d'identification d'équipement, s'il est déterminé que les informations détaillées stockées dans la base de données (140) ont changé ;
la réception au niveau du dispositif de réseau (100) des informations détaillées concernant le service à partir de l'équipement de réseau ;
le stockage dans la base de données (140) des informations détaillées concernant le service reçues à partir de l'équipement de réseau ; et
la transmission à partir du dispositif de réseau (100) d'une demande pour le service correspondant aux informations détaillées concernant le service fourni par l'équipement de réseau.

8. Dispositif pour demander un service fourni par un équipement de réseau connecté à un réseau, le dispositif comprenant :
une base de données (140) pour stocker des informations d'identification d'équipement concernant l'équipement de réseau et des informations détaillées concernant un service fourni par l'équipement de réseau ;
un module d'accès à la base de données (120) pour accéder à la base de données (140) ; et
un module de traitement de paquet (110, 130) pour traiter un paquet d'informations de service qui est transmis et reçu par le réseau et pour communiquer avec le module d'accès à la base de données (120) ;
dans lequel le module de traitement de paquet (110, 130) comprend un module de gestion de demande de service (110) pour communiquer avec le module d'accès à la base de données (120) et le réseau (160) et pour recevoir des informations d'identification pour l'équipement de réseau connecté au réseau ;
**caractérisé en ce que** le module de traitement de paquet (110, 130) comprend en outre un module de comparaison d'informations de service (130) ; et dans lequel
le module d'accès à la base de données (120) est adapté pour déterminer si les informations d'identification reçues pour l'équipement de réseau connecté au réseau ont été précédemment stockées dans la base de données (140) ;
le module de gestion de demande de service (110) pour communication est adapté pour demander et recevoir des informations de changement de service concernant un service fourni par l'équipement de réseau identifiée par les informations d'identification d'équipement, s'il est déterminé que les informations d'identification d'équipement reçues ont été précédemment stockées dans la base de données (140) ; et pour transmettre les informations de changement de service reçues au module de comparaison d'informations de service (130) ;
le module de comparaison d'informations de service (130) est adapté pour recevoir lesdites informations de changement de service pour déterminer si les informations détaillées concernant le service fourni par l'équipement de réseau stockées dans la base de données (140) ont changé sur la base des informations de changement de service, et
le module de gestion de demande de service (110) est adapté pour transmettre une demande pour le service correspondant aux informations détaillées concernant le service stockées dans la base de données (140), s'il est déterminé par le module de comparaison d'informations de service (130) que les informations détaillées stockées dans la base de données (140) n'ont pas changé.

9. Dispositif selon la revendication 8, dans lequel les informations d'identification d'équipement comprennent des informations indiquant un type de l'équipement de réseau, un numéro de série utilisé pour identifier l'équipement de réseau, ou des informations de référence pour le service fourni par l'équipement de réseau.

10. Dispositif selon la revendication 9, dans lequel le module de comparaison d'informations de service (130) est adapté pour déterminer si les informations détaillées concernant le service stockées dans la base de données (140) ont changé sur la base d'une valeur « dernièrement modifiée » incluse dans un paquet reçu à partir de l'équipement de réseau en utilisant un procédé HEAD d'un protocole de transfert hypertexte (HTTP).

11. Dispositif selon la revendication 9, dans lequel le module de comparaison d'informations de service (130) est adapté pour déterminer si les informations détaillées concernant le service stockées dans la base de données (140) ont changé sur la base d'informations d'identification indiquant si les informations détaillées concernant le service parmi les informations incluses dans un paquet reçues à partir de l'équipement de réseau par le module de gestion de demande de service (110) ont changé.
